# EUROPEAN PATENT APPLICATION

(11) **EP 4 372 050 A1**
(43) Date of publication of application: **22.05.2024**
(21) Application number: 23805436.5
(22) Date of filing: 19.04.2023
(51) Int. Cl.: C08L 67/02, C08L 23/08, C08L 69/00, C08L 9/00, C08K 3/34

(54) **POLYBUTYLENE TEREPHTHALATE RESIN COMPOSITION, METHOD FOR MANUFACTURING SAME, AND MOLDED ARTICLE COMPRISING SAME**

(30) Priority: 29.09.2022 KR 20220124293
(71) Applicant: LG Chem, Ltd., Seoul 07336 (KR)
(72) Inventor: YANG, Jae Kyung, Daejeon 34122 (KR); KWON, Tae Hun, Daejeon 34122 (KR); KANG, Donghoon, Daejeon 34122 (KR); HWANG, Hee Jae, Daejeon 34122 (KR); PARK, Jae Chan, Daejeon 34122 (KR)
(74) Representative: Goddar, Heinz J.
(86) International application number: PCT/KR2023/005271
(87) International publication number: WO 2024/071549

(57) **Abstract**

The present invention relates to a polybutylene terephthalate resin composition, a method of preparing the same, and a molded article including the same. The polybutylene terephthalate resin composition according to the present invention may improve both injection solidification rate and impact strength, which are in a trade-off relationship due to changes in materials used, may satisfy the physical property balance between mechanical properties, fluidity, and heat resistance, and may provide excellent product reliability and appearance quality.

## Description

### [Technical Field]

### [Cross-Reference to Related Application]

This application claims priority to Korean Patent Application No. 10-2022-0124293, filed on September 29, 2022, in the Korean Intellectual Property Office, the disclosure of which is incorporated herein by reference.

The present invention relates to a polybutylene terephthalate resin composition, a method of preparing the same, and a molded article including the same. More particularly, the present invention relates to a polybutylene terephthalate resin composition capable of improving both injection solidification rate and impact strength, which are in a trade-off relationship due to changes in raw materials used, satisfying the physical property balance between mechanical properties, fluidity, and heat resistance, and providing excellent product reliability and appearance quality, a method of preparing the polybutylene terephthalate resin composition, and a molded article including the polybutylene terephthalate resin composition.

### [Background Art]

When manufacturing automobile parts, a method of increasing crystallinity by mixing a polyester resin and an organic/inorganic injection solidification accelerator for improving injection solidification rate is widely used.

However, when crystallinity is increased through an increase in solidification rate, impact strength may be reduced.

Recently, as miniaturized or thin-film electronic equipment parts receive attention, higher impact strength is required than ever before. Accordingly, techniques capable of increasing crystallinity are used. However, when crystallinity is increased by these techniques, cracks may be formed in products.

Accordingly, when a reinforcing agent is added for the purpose of increasing impact strength, impact strength is increased so that occurrence of cracks may be prevented. However, injection solidification rate is significantly reduced. That is, injection solidification rate and impact strength are in a trade-off relationship.

Therefore, it is necessary to develop a method capable of efficiently improving both injection solidification rate and impact strength by overcoming this trade-off relationship and automobile interior materials having excellent injection solidification rate and impact strength.

### [Related Art Documents]

### [Patent Documents]

JP 2019-156954 A (Publication date: September 19, 2019)

### [Disclosure]

### [Technical Problem]

Therefore, the present invention has been made in view of the above problems, and it is one object of the present invention to provide a polybutylene terephthalate resin composition that has an advantage of cost reduction by changing materials used, may be used as an unpainted product and thus has excellent economics, improves both injection solidification rate and impact strength, which are in a trade-off relationship, satisfies the physical property balance between mechanical properties, fluidity, and heat resistance, and provides excellent product reliability and appearance quality.

It is another object of the present invention to provide a molded article manufactured using the polybutylene terephthalate resin composition.

The above and other objects can be accomplished by the present invention described below.

### [Technical Solution]

In accordance with one aspect of the present invention, provided is a polybutylene terephthalate resin composition including:
80 to 99 % by weight of a base resin including a polybutylene terephthalate resin having an intrinsic viscosity (η) of greater than 1.05 and a polybutylene terephthalate resin having an intrinsic viscosity (η) of 1.05 or less;
0.01 to 10 % by weight of a carboxy reactive epoxy resin; and
0.01 to 10 % by weight of polybutadiene rubber.

The polybutylene terephthalate resin having an intrinsic viscosity (η) of 1.05 or less may include a polybutylene terephthalate resin having an intrinsic viscosity of less than 0.9 and a polybutylene terephthalate resin having an intrinsic viscosity of greater than 0.9 and 1.05 or less in a weight ratio of 30:70 to 60:40.

The polybutylene terephthalate resin having an intrinsic viscosity (η) of greater than 1.05 may include 29 to 55 % by weight of a polybutylene terephthalate resin having an intrinsic viscosity of greater than 1.05 and 1.5 or less based on 100 % by weight in total of all components (the base resin, the carboxy reactive epoxy resin, the polybutadiene rubber, and additives) constituting the polybutylene terephthalate resin composition

The carboxy reactive epoxy resin may include one or more selected from an ethylene-n-butyl acrylate-glycidyl methacrylate copolymer, an ethylene-glycidyl methacrylate copolymer, an ethylene-acrylic ester-glycidyl methacrylate copolymer, an ethylene-methyl acrylate-glycidyl methacrylate copolymer, an ethylene-dimethacrylate-glycidyl methacrylate copolymer, an ethylene-acrylate-glycidyl methacrylate copolymer, and an ethylene-vinyl acetate-glycidyl methacrylate copolymer.

The carboxy reactive epoxy resin may include 1 to 15 % by weight of a glycidyl methacrylate-derived unit.

The polybutadiene rubber may have a bulk density of 0.25 g/cc or more as measured according to ASTM D1895.

The polybutadiene rubber may have an Izod impact strength (-30°C, 1/4" thickness) of 10 kg/cm.cm or more and an Izod impact strength (23°C, 1/4" thickness) of 50 kg/cm.cm or more as measured according to ASTM D256.

In the polybutadiene rubber, a percentage of particles passing through a #20 mesh of total particles may be 3 % or less.

The polybutylene terephthalate resin composition may include an injection solidification accelerator. As a specific example, the polybutylene terephthalate resin composition may include an inorganic injection solidification accelerator such as talc, wollastonite, and mica or an ethylene acrylate-based compound.

The injection solidification accelerator may be included in an amount of 0.01 to 1 % by weight based on 100 % by weight in total of all components (the base resin, the carboxy reactive epoxy resin, the polybutadiene rubber, and the additives) constituting the polybutylene terephthalate resin composition.

The polybutylene terephthalate resin composition may include one or more additives selected from a lubricant, an antioxidant, and a colorant.

In accordance with another aspect of the present invention, provided is a polybutylene terephthalate resin composition including:
29 to 55 % by weight of a polybutylene terephthalate resin having an intrinsic viscosity (η) of greater than 1.05 and 1.5 or less;
0 to 68 % by weight of a polybutylene terephthalate resin having an intrinsic viscosity (η) of greater than 0.9 and 1.05 or less;
0 to 50 % by weight of a polybutylene terephthalate resin having an intrinsic viscosity (η) of 0.7 or more and less than 0.9;
0.01 to 10 % by weight of a carboxy reactive epoxy resin;
0.01 to 10 % by weight of polybutadiene rubber; and
0.01 to 1 % by weight of an injection solidification accelerator.

In accordance with still another aspect of the present invention, provided is a polybutylene terephthalate resin composition including:
i) 29 to 54 % by weight of a polybutylene terephthalate resin having an intrinsic viscosity (η) of greater than 1.05 and 1.5 or less;
ii) 35 to 68 % by weight of a polybutylene terephthalate resin having an intrinsic viscosity (η) of greater than 0.9 and 1.05 or less or 41 to 49 % by weight of a polybutylene terephthalate resin having an intrinsic viscosity (η) of 0.7 or more and less than 0.9;
iii) 0.01 to 10 % by weight of a carboxy reactive epoxy resin;
iv) 0.01 to 10 % by weight of polybutadiene rubber; and
v) 0 to 1 % by weight of an injection solidification accelerator,
wherein a total weight of the polybutylene terephthalate resins (i) and (ii) is 80 to 99 % by weight.

In accordance with still another aspect of the present invention, provided is a method of preparing a polybutylene terephthalate resin composition, the method including:
melt-kneading and extruding 80 to 99 % by weight of a base resin including a polybutylene terephthalate resin having an intrinsic viscosity (η) of greater than 1.05 and a polybutylene terephthalate resin having an intrinsic viscosity (η) of 1.05 or less; 0.01 to 10 % by weight of a carboxy reactive epoxy resin; 0.01 to 10 % by weight of polybutadiene rubber; and 0 to 1 % by weight of an injection solidification accelerator using an extruder.

The injection solidification accelerator may include the ethylene-acrylate acid-based compound in an amount of 0.01 to 1 % by weight based on 100 % by weight in total of the base resin, the carboxy reactive epoxy resin, the polybutadiene rubber, and the additives constituting the polybutylene terephthalate resin composition.

In accordance with yet another aspect of the present invention, provided is a molded article including the above-described polybutylene terephthalate resin composition.

The molded article may be an automotive part.

The automotive part may be a connector, a carburetor part, a fender, a spoiler, a spark plug terminal plate, an oil supply system part, a dashboard, a car igniter, an accelerator, and a clutch pedal.

### [Advantageous Effects]

A polybutylene terephthalate resin composition according to the present invention includes a polybutylene terephthalate resin having a specific intrinsic viscosity, polybutadiene rubber, and a carboxy reactive epoxy resin. A molded article can be manufactured by molding the polybutylene terephthalate resin composition.

In addition, when a molded article is manufactured using the composition of the present invention, both injection solidification rate and impact strength, which are in a trade-off relationship, can be improved, the physical property balance between mechanical properties and fluidity can be satisfied, and appearance quality can be improved due to excellent moldability.

Accordingly, the polybutylene terephthalate resin composition according to the present invention can be applied to molded articles related to fastening parts such as connectors.

### [Description of Drawings]

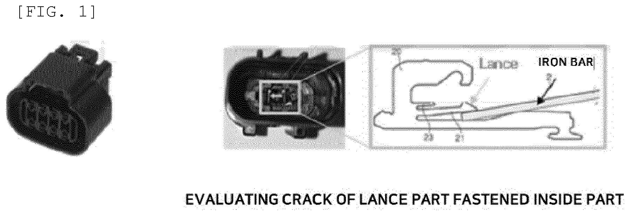

FIG. 1 is a diagram schematically showing a lance crack measurement method performed on an injection-molded article obtained according to one embodiment of the present invention.

### [Best Mode]

Hereinafter, the present invention will be described in more detail to aid in understanding of the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

In this description, a polymer including a certain compound means a polymer prepared by polymerizing the compound, and a unit in the polymer is derived from the compound.

Unless otherwise specified, all numbers, values, and/or expressions expressing quantities of ingredients, reaction conditions, polymer compositions, and formulations used herein are to be understood as being qualified by the term "about." This is because these numbers are essentially approximations that reflect, among other things, the various uncertainties of measurement that arise in obtaining these values. In addition, when numerical ranges are disclosed in this disclosure, such ranges are contiguous and include all values from the minimum value to the maximum value of such ranges unless otherwise indicated. Also, when such ranges refer to integers, all integers inclusive from the minimum value to the maximum value are included unless otherwise specified.

In the present disclosure, when a range is specified for a variable, it will be understood that the variable includes all values within a range including the endpoints of the range. For example, a range of "5 to 10" includes values of 5, 6, 7, 8, 9, and 10, any subranges such as 6 to 10, 7 to 10, 6 to 9, and 7 to 9, and any values among integers that fit within the scope of a range such as 5.5 to 8.5 and 6.5 to 9. Also, a range of 10 to 30 % includes values such as 10 %, 11 %, 12 %, and 13 %, all integers up to 30 %, and any values among all reasonable integers within the scope of a range, such as 10.5 %, 15.5 %, 25.5 %.

In the present disclosure, unless otherwise specified, the "injection solidification accelerator" refers to a material introduced to reduce solidification time during injection molding. For reference, the solidification time may vary depending on the design and size of the mold of an injection molding machine even when the same material is used.

In the present disclosure, unless otherwise specified, melt index may be measured at 250 °C under a load of 2.16 kg according to ISO 1133.

The present inventors confirmed that, when an automotive interior material was manufactured using a polybutylene terephthalate resin composition including a polybutylene terephthalate resin having a specific intrinsic viscosity, polybutadiene rubber, and a carboxy reactive epoxy resin, both injection solidification rate and impact strength, which are in a trade-off relationship, were improved, the physical property balance between mechanical properties, fluidity, and heat resistance was satisfied, and excellent product reliability and appearance quality were provided. Based on these results, the present inventors completed an unpainted automotive interior material that satisfies the physical property balance between mechanical properties, fluidity, and heat resistance and has excellent moldability and appearance quality.

The polybutylene terephthalate resin composition according to one embodiment of the present invention includes 80 to 99 % by weight of a base resin including a polybutylene terephthalate resin having an intrinsic viscosity (η) of greater than 1.05 and a polybutylene terephthalate resin having an intrinsic viscosity (η) of 1.05 or less; 0.01 to 10 % by weight of a carboxy reactive epoxy resin; and 0.01 to 10 % by weight of polybutadiene rubber.

As another example, the polybutylene terephthalate resin composition may include 1 % by weight or less of an injection solidification accelerator.

Hereinafter, the components constituting the polybutylene terephthalate resin composition will be described in detail.

### Base resin

The base resin according to one embodiment of the present invention contains a polybutylene terephthalate resin, imparts moldability to the polybutylene terephthalate resin composition including the base resin, and imparts chemical resistance to a molded article manufactured using the polybutylene terephthalate resin composition.

The polybutylene terephthalate resin is a crystalline resin and plays a role in preventing penetration of chemicals from the outside. In addition, the polybutylene terephthalate resin has a crystallized structure, which improves the flowability of the polybutylene terephthalate resin composition containing the same during injection molding, resulting in excellent appearance quality.

Both a polybutylene terephthalate resin having an intrinsic viscosity (η) of greater than 1.05 and a polybutylene terephthalate resin having an intrinsic viscosity (η) of 1.05 or less are included. In this case, both injection solidification rate and impact strength, which are in a trade-off relationship, may be improved.

As a specific example, both a polybutylene terephthalate resin having an intrinsic viscosity (η) of greater than 1.05 and 1.5 or less and one selected from a polybutylene terephthalate resin having an intrinsic viscosity (η) of greater than 0.9 and 1.05 or less and a polybutylene terephthalate resin having an intrinsic viscosity (η) of less than 0.9 are included. In this case, the physical property balance between injection solidification rate and impact strength, which are in a trade-off relationship, may be appropriate.

In the present disclosure, when intrinsic viscosity is measured, unless noted otherwise, a sample solution with a concentration of 0.05 g/ml is prepared by completely dissolving a sample in methylene chloride as a solvent, and then is filtered using a filter to obtain a filtrate. Then, using the obtained filtrate, intrinsic viscosity is measured at 20 °C using a Ubbelohde viscometer.

For example, based on 100 % by weight in total of all components (base resin, carboxy reactive epoxy resin, polybutadiene rubber, and additives) constituting the polybutylene terephthalate resin composition, the polybutylene terephthalate resin may be included in an amount of 80 to 99 % by weight, as a specific example, 85 to 99 % by weight, preferably 90 to 99 % by weight. When the polybutylene terephthalate resin is included in an amount less than the range, a molded article manufactured using the polyester resin composition including the polybutylene terephthalate resin may have poor rigidity and heat resistance. When the polybutylene terephthalate resin is included in an amount exceeding the range, cracks may be formed in a molded article manufactured using the polyester resin composition including the polybutylene terephthalate resin.

For example, the polybutylene terephthalate resin having an intrinsic viscosity (η) of less than 0.9 and the polybutylene terephthalate resin having an intrinsic viscosity of greater than 0.9 and 1.05 or less may be included in a weight ratio of 30:70 to 60:40, as a specific example, 32:68 to 68:32, preferably 35:65 to 65:35. In this case, the physical property balance between mechanical properties, fluidity, and heat resistance may be excellent.

For example, the intrinsic viscosity of the polybutylene terephthalate resin having an intrinsic viscosity (η) of greater than 1.05 and 1.5 or less may be 1.1 to 1.4, as a specific example, 1.1 to 1.3, preferably 1.1 to 1.2. In this case, the physical property balance between mechanical properties, fluidity, and heat resistance may be excellent.

For example, the intrinsic viscosity of the polybutylene terephthalate resin having an intrinsic viscosity (η) of greater than 0.9 and 1.05 or less may be 0.91 to 1.05, as a specific example, 0.95 to 1.05, preferably 0.98 to 1.02. In this case, the physical property balance between mechanical properties, fluidity, and heat resistance may be excellent.

For example, the intrinsic viscosity of the polybutylene terephthalate resin having an intrinsic viscosity (η) of 0.7 or more and less than 0.9 may be 0.7 to 0.85, as a specific example, 0.75 to 0.85, preferably 0.8 to 0.85. In this case, the physical property balance between mechanical properties, fluidity, and heat resistance may be excellent.

The polybutylene terephthalate resin having intrinsic viscosity within the aforementioned range is not particularly limited and may be prepared and used through a method known in the art, or commercially available products may be used.

For example, based on 100 % by weight in total of all components (base resin, carboxy reactive epoxy resin, polybutadiene rubber, and additives) constituting the polybutylene terephthalate resin composition, the polybutylene terephthalate resin having an intrinsic viscosity (η) of greater than 1.05 and 1.5 or less may be included in an amount of 29 to 55 % by weight, as a specific example, 30 to 55 % by weight, preferably 32 to 53 % by weight. In this case, the physical property balance between mechanical properties, fluidity, and heat resistance may be excellent.

For example, based on 100 % by weight in total of all components (base resin, carboxy reactive epoxy resin, polybutadiene rubber, and additives) constituting the polybutylene terephthalate resin composition, the polybutylene terephthalate resin having an intrinsic viscosity (η) of greater than 0.9 and 1.05 or less may be included in an amount of 0 to 68 % by weight, as a specific example, 40 to 68 % by weight, preferably 35 to 68 % by weight, more preferably 40 to 65 % by weight, still more preferably 40 to 60 % by weight. In this case, the physical property balance between mechanical properties, fluidity, and heat resistance may be excellent.

For example, based on 100 % by weight in total of all components (base resin, carboxy reactive epoxy resin, polybutadiene rubber, and additives) constituting the polybutylene terephthalate resin composition, the polybutylene terephthalate resin having an intrinsic viscosity (η) of 0.7 or more and less than 0.9 may be included in an amount of 0 to 50 % by weight, as a specific example, 30 to 50 % by weight, preferably 40 to 50 % by weight, more preferably 40 to 48 % by weight, still more preferably 40 to 45 % by weight. In this case, the physical property balance between mechanical properties, fluidity, and heat resistance may be excellent.

### Carboxy reactive epoxy resin

In the present disclosure, unless otherwise specified, the "carboxy reactive epoxy resin" refers to an epoxy-functional alkylene (meth)acrylic copolymer formed from an epoxy-functional (meth)acrylic monomer and an alkylene.

In the present disclosure, unless otherwise specified, the "(meth)acrylic" includes both acrylic and methacrylic monomers, and the "(meth)acrylate" includes both acrylate and methacrylate monomers.

Specific examples of the epoxy-functional (meth)acrylic monomer may include monomers containing 1,2-epoxy groups such as glycidyl acrylate and glycidyl methacrylate.

In the present disclosure, as a specific example, the carboxy reactive epoxy resin may include one or more selected from an ethylene-n-butyl acrylate-glycidyl methacrylate copolymer, an ethylene-glycidyl methacrylate copolymer, an ethylene-acrylic ester-glycidyl methacrylate copolymer, an ethylene-methyl acrylate-glycidyl methacrylate copolymer, an ethylene-dimethacrylate-glycidyl methacrylate copolymer, an ethylene-acrylate-glycidyl methacrylate copolymer, and an ethylene-vinyl acetate-glycidyl methacrylate copolymer.

For example, the carboxy reactive epoxy resin of the present invention may be a copolymer obtained by polymerizing 1 to 15 % by weight or 3 to 10 % by weight of a glycidyl methacrylate monomer, 60 to 74 % by weight or 63 to 74 % by weight of an ethylene monomer, and 20 to 30 % by weight or 25 to 30 % by weight of n-butyl acrylate. In this case, when the content of the glycidyl methacrylate monomer is too high, an injection-molded article manufactured using the polybutylene terephthalate resin composition including the glycidyl methacrylate monomer may have low fluidity and thus may have poor appearance.

Based on 100 % by weight in total of all components (base resin, carboxy reactive epoxy resin, polybutadiene rubber, and additives) constituting the composition, the carboxy reactive epoxy resin may be included in an amount of 0.01 to 10 % by weight, as a preferred example, 0.1 to 4 % by weight, as a more preferred example, 1 to 4 % by weight. When the carboxy reactive epoxy resin is included in an amount exceeding the range, gas may be generated on the surface of a molded article manufactured using the polybutylene terephthalate resin composition including the carboxy reactive epoxy resin, resulting in poor appearance.

### Polybutadiene rubber

As the polybutadiene rubber according to one embodiment of the present invention, polybutadiene rubber capable of providing impact strength to a molded article manufactured by injection-molding the polybutylene terephthalate resin composition of the present invention may be used.

In one embodiment of the present invention, for example, the polybutadiene rubber may have an Izod impact strength (-30°C, 1/4" thickness) of 10 kg/cm.cm or more and an Izod impact strength (23°C, 1/4" thickness) of 50 kg/cm.cm or more as measured according to ASTM D256. In this case, the physical property balance between mechanical properties, fluidity, and heat resistance may be excellent.

As a specific example, the polybutadiene rubber may have an Izod impact strength (-30°C, 1/4" thickness) of 10 to 100 kg/cm.cm and an Izod impact strength (23°C, 1/4" thickness) of 50 to 150 kg/cm.cm as measured according to ASTM D256. In this case, the physical property balance between mechanical properties, fluidity, and heat resistance may be excellent.

The weight ratio of linear polybutadiene and branched polybutadiene included in the polybutadiene rubber may be 25:75 to 90:10.

The linear polybutadiene and branched polybutadiene of the polybutadiene may be solidified after premixing in a liquid phase at a weight ratio of 50:75 to 50:25.

The linear type of the polybutadiene may be obtained by polymerizing 1,3-butadiene or a butadiene derivative using a transition metal Ziegler-Natta catalyst in the presence of a non-polar solvent, and may be obtained by including a dialkyl zinc compound represented by Chemical Formula 1 below as a molecular weight regulator and a nickel catalyst composed of nickel salt, organoaluminum, and a fluoride compound as the transition metal Ziegler-Natta catalyst.

Chemical Formula 1 R1-Zn-R2

In Chemical Formula 1, R1 and R2 are the same or different alkyl groups having 1 to 5 carbon atoms.

The branched type of the polybutadiene may be obtained by polymerizing 1,3-butadiene or a butadiene derivative using a transition metal Ziegler-Natta catalyst in the presence of a non-polar solvent. In this case, as the transition metal Ziegler-Natta catalyst, a nickel catalyst composed of nickel salt, a fluoride compound, organoaluminum, and aluminoxane may be used, and the reactivity of organoaluminum and aluminoxane may be controlled.

The nickel salt may be a saturated, unsaturated, cyclic, or linear carboxylate having 8 to 20 carbon atoms. As a specific example, the carboxylate may be nickel octoate, nickel versatate, or nickel naphthenate.

1,3-butadiene or the butadiene derivative may include one or more selected from 1,3-butadiene, isoprene, 1,3-pentadiene, 2,3-dimethyl-1,3-butadiene, myrcene, and derivatives thereof.

The non-polar solvent may include one or more selected from pentane, hexane, isopentane, heptane, octane, isooctane, cyclopentane, methylcyclopentane, cyclohexane, methylcyclohexane, ethylcyclohexane, benzene, toluene, ethylbenzene and xylene.

In one embodiment of the present invention, for example, in the polybutadiene rubber, a percentage of particles passing through a #20 mesh of total particles may be 3 % or less, as a specific example, 0.01 to 3 %, preferably 0.1 to 3 %. In this case, the physical property balance between mechanical properties, fluidity, and heat resistance may be excellent.

For example, based on 100 % by weight in total of all components (base resin, carboxy reactive epoxy resin, polybutadiene rubber, and additives) constituting the composition, the polybutadiene rubber of the present invention may be included in an amount of 0.01 to 10 % by weight, as a preferred example, 0.1 to 5 % by weight, as a more preferred example, 0.1 to 5 % by weight, as a still more preferred example, 1 to 5 % by weight, as a most preferred example, 2 to 5 % by weight. In this case, appropriate impact resistance may be imparted to a molded article manufactured using the polybutylene terephthalate resin composition including the polybutadiene rubber, and at the same time, the disadvantage of delaying solidification rate may be overcome.

The butadiene resin is not particularly limited and may be prepared and used through a method known in the art, or a commercially available material may be used. For example, EM538 (LG Chemical Co.) may be used.

### Injection solidification accelerator

The injection solidification accelerator according to one embodiment of the present invention may be included in the polybutylene terephthalate resin composition. In this case, the solidification rate of a molded article manufactured by injection-molding the polybutylene terephthalate resin composition may be reduced, thereby improving product reliability and crystallinity.

For example, as the injection solidification accelerator, an inorganic injection solidification accelerator such as talc, wollastonite, and mica or an organic injection solidification accelerator such as an ethylene-acrylate acid-based compound may be used. In the case of using the organic injection solidification accelerator in combination with the above-mentioned polybutadiene rubber, high impact strength may be maintained while implementing high solidification rate. Accordingly, occurrence of cracks in parts may be reduced, and small/thin-film materials may be easily manufactured.

For example, the ethylene-acrylate acid-based compound may include an ethylene compound and unsaturated acrylates.

In one embodiment of the present invention, the ethylene-acrylate acid-based compound may have a bulk density of 0.25 g/cc or more as measured according to ASTM D1895. In this case, the physical property balance between mechanical properties, fluidity, and heat resistance may be excellent.

For example, the ethylene-acrylate acid-based compound of the present invention may be a copolymer obtained by polymerizing 1 to 15 % by weight or 3 to 10 % by weight of an ethylene monomer, 60 to 74 % by weight or 63 to 74 % by weight of an acrylate monomer, and 20 to 30 % by weight or 25 to 30 % by weight of an acrylic acid monomer. In this case, when the content of the ethylene monomer is too high, an injection-molded article manufactured using the polybutylene terephthalate resin composition including the ethylene monomer may have poor appearance due to a decrease in fluidity of the composition.

For example, based on 100 % by weight in total of all components (base resin, carboxy reactive epoxy resin, polybutadiene rubber, and additives) constituting the composition, the ethylene-acrylate acid-based compound may be included in an amount of 0.01 to 1 % by weight, as a preferred example, 0.01 to 0.8 % by weight, as a more preferred example, 0.1 to 0.5 % by weight. When the content of the ethylene-acrylate acid-based compound is too high, cracks may be formed in the surface of a molded article manufactured using the polybutylene terephthalate resin composition including the ethylene-acrylate acid-based compound.

The injection solidification accelerator is not particularly limited and may be prepared and used through a method known in the art or a commercially available material may be used. For example, PTW series (Dupont Co.) may be used.

### Additives

The polybutylene terephthalate resin composition according to one embodiment of the present invention may include suitable additives to improve the flowability thereof.

For example, based on 100 % by weight in total of all components (base resin, carboxy reactive epoxy resin, polybutadiene rubber, and additives) constituting the composition, the additives may be included in an amount of 0.01 to 10 % by weight, as a preferred example, 0.1 to 8 % by weight, as a more preferred example, 0.1 to 5 % by weight, as a still more preferred example, 1 to 5 % by weight, as a most preferred example, 1 to 3 % by weight. When the additives are included in an amount less than the range, cracks may be formed in a molded article manufactured using the polybutylene terephthalate resin composition including the additives due to a decrease in solidification rate. When the additives are included in an amount exceeding the range, a molded article manufactured using the polybutylene terephthalate resin composition including the additives may have poor rigidity and heat resistance.

For example, the additives may include one or more selected from a lubricant, an antioxidant, and a colorant.

As the lubricant, any lubricant may be used without particular limitation as long as ease of ejection and flowability of an injection screw used to manufacture a molded article from the polybutylene terephthalate resin composition containing the lubricant are secured.

The lubricant may be used in the present invention and is not particularly limited as long as the lubricant secures the properties. Preferably, polyethylene-based wax may be used.

For example, based on 100 % by weight in total of all components (base resin, carboxy reactive epoxy resin, polybutadiene rubber, and additives) constituting the composition, the lubricant may be included in an amount of 0.01 to 10 % by weight, as a preferred example, 0.1 to 3 % by weight, as a more preferred example, 0.1 to 2 % by weight, as a still more preferred example, 0.1 to 1 % by weight, as a most preferred example, 0.1 to 0.5 % by weight. When the content of the lubricant exceeds the range, stains may form on the surface of a molded article manufactured using the polybutylene terephthalate resin composition including the lubricant, resulting in poor appearance.

As the lubricant, known various lubricants may be used as long as the lubricants do not adversely affect the thermoplastic resin composition of the present invention. Representative commercially available products may include a polyethylene compound (product name: LC102N).

As the antioxidant, any antioxidant may be used without particular limitation as long as the antioxidant may prevent a molded article manufactured using the polybutylene terephthalate resin composition including the antioxidant from being denatured by high temperature.

The antioxidant may be used without particular limitation as long as the antioxidant secures the properties. For example, the antioxidant may include a primary antioxidant, a secondary antioxidant, or both. In this case, oxidation by heat may be prevented during an extrusion process, and mechanical properties may be excellent.

The primary antioxidant and the secondary antioxidant may be included in a weight ratio of 1:0.5 to 1.5, preferably 1:0.7 to 1.2. In this case, processability and physical property balance may be improved.

The primary antioxidant may be a phenolic antioxidant. For example, the primary antioxidant may include a hindered phenolic stabilizer having a crystallization temperature (Tm) of 110 to 130 °C. As a specific example, the primary antioxidant may include tetrakis[ethylene-3-(3,5-di-t-butyl-hydroxy phenyl)propionate], octadecyl 3-(3,5-di-t-butyl-4-hydroxyphenyl)propionate, or a combination thereof.

For example, based on 100 % by weight in total of all components (base resin, carboxy reactive epoxy resin, polybutadiene rubber, and additives) constituting the composition, the phenolic antioxidant may be included in an amount of 0.01 to 10 % by weight, as a preferred example, 0.01 to 3 % by weight, as a more preferred example, 0.01 to 2 % by weight, as a still more preferred example, 0.01 to 1 % by weight, as a most preferred example, 0.05 to 0.5 % by weight. When the content of the phenolic antioxidant is too high, stains may form on the surface of a molded article manufactured using the polybutylene terephthalate resin composition including the phenolic antioxidant, resulting in poor appearance.

The secondary antioxidant may be a phosphorus antioxidant. For example, the secondary antioxidant may include a phosphite-based antioxidant, as a specific example, tris-(2,4-di-tert-butylphenyl) phosphite, di-(2,4-di-t-butylphenyl)pentaerythritol diphosphate, or a combination thereof.

For example, based on 100 % by weight in total of all components (base resin, carboxy reactive epoxy resin, polybutadiene rubber, and additives) constituting the composition, the phosphorus antioxidant may be included in an amount of 0.01 to 10 % by weight, as a preferred example, 0.01 to 3 % by weight, as a more preferred example, 0.01 to 2 % by weight, as a still more preferred example, 0.01 to 1 % by weight, as a most preferred example, 0.1 to 0.5 % by weight. When the content of the phosphorus antioxidant is too high, stains may form on the surface of a molded article manufactured using the polybutylene terephthalate resin composition including the phosphorus antioxidant, resulting in poor appearance.

As the antioxidant, known various antioxidants may be used as long as the antioxidants do not adversely affect the thermoplastic resin composition of the present invention. Representative commercially available secondary antioxidants may include a bis(2,4-di-tert-butylphenyl)pentaerythritol diphosphite compound (product name: Songnox 6260), and representative commercially available primary antioxidants may include a pentaerythritol tetrakis(3-(3,5-di-tert-butyl-4-hydroxyphenyl)propionate) compound (product name: IR1010), without being limited thereto.

The colorant according to the present invention may include a pigment or a dye.

For example, the pigment may be an inorganic pigment.

For example, the inorganic pigment may include one or more selected from the group consisting of metal compounds such as Ti, Pb, Fe, and Cr and carbon black, and the metal compound is preferably a metal oxide or a metal hydroxide. As a specific example, the inorganic pigment may include one or more selected from the group consisting of TiO₂ and zinc oxide as white inorganic pigments; carbon black and graphite as black inorganic pigments; IOR, cadmium red, and red lead (Pb₃O₄) as red inorganic pigments; chrome yellow, zinc chromate, and cadmium yellow as yellow inorganic pigments; and chrome green and zinc green as green inorganic pigments, and most preferably, is carbon black, which is a black inorganic pigment.

For example, based on 100 parts by weight in total of all components (base resin, carboxy reactive epoxy resin, polybutadiene rubber, and additives) constituting the composition, the colorant may be included in an amount of 0.01 to 10 parts by weight, as a preferred example, 0.01 to 3 parts by weight, as a more preferred example, 0.1 to 3 parts by weight, as a still more preferred example, 0.5 to 3 parts by weight. When the content of the colorant is too high, cracks may be formed in a molded article manufactured using the polybutylene terephthalate resin composition including the colorant, resulting in poor appearance.

When necessary, a hydrolysis inhibitor may be further included.

As the hydrolysis inhibitor, known various hydrolysis inhibitors may be used as long as the hydrolysis inhibitors do not adversely affect the thermoplastic resin composition of the present invention. Representative commercially available products may include an organic phosphate compound such as sodium phosphate monobasic represented by the formula of NaH₂PO₄.

For example, based on 100 % by weight in total of all components (base resin, carboxy reactive epoxy resin, polybutadiene rubber, and additives) constituting the composition, the hydrolysis inhibitor may be included in an amount of 0.01 to 5 % by weight, as a preferred example, 0.1 to 3 % by weight, as a more preferred example, 0.1 to 2 % by weight, as a still more preferred example, 0.1 to 1 % by weight, as a most preferred example, 0.1 to 0.5 % by weight. When the content of the hydrolysis inhibitor exceeds the range, stains may form on the surface of a molded article manufactured using the polybutylene terephthalate resin composition including the hydrolysis inhibitor, resulting in poor appearance.

### Polybutylene terephthalate resin composition

The polybutylene terephthalate resin composition according to one embodiment of the present invention includes 80 to 99 % by weight of a base resin including a polybutylene terephthalate resin having an intrinsic viscosity (η) of greater than 1.05 and a polybutylene terephthalate resin having an intrinsic viscosity (η) of 1.05 or less; 0.01 to 10 % by weight of a carboxy reactive epoxy resin; 0.01 to 10 % by weight of polybutadiene rubber; and 0 to 1 % by weight of an injection solidification accelerator. In this case, both injection solidification rate and impact strength may be improved, thereby satisfying the physical property balance between mechanical properties, fluidity, and heat resistance. In addition, excellent product reliability and appearance quality may be provided.

The polybutylene terephthalate resin composition according to another embodiment of the present invention includes 29 to 55 % by weight of a polybutylene terephthalate resin having an intrinsic viscosity (η) of greater than 1.05 and 1.5 or less; 0 to 68 % by weight of a polybutylene terephthalate resin having an intrinsic viscosity (η) of greater than 0.9 and 1.05 or less; 0 to 50 % by weight of a polybutylene terephthalate resin having an intrinsic viscosity (η) of 0.7 or more and less than 0.9; 0.01 to 10 % by weight of a carboxy reactive epoxy resin; 0.01 to 10 % by weight of polybutadiene rubber; and 0 to 1 % by weight of an injection solidification accelerator. In this case, both injection solidification rate and impact strength may be improved, thereby satisfying the physical property balance between mechanical properties, fluidity, and heat resistance. In addition, excellent product reliability and appearance quality may be provided. Accordingly, the polybutylene terephthalate resin composition may be used to manufacture a molded article.

The polybutylene terephthalate resin composition according to still another embodiment of the present invention includes i) 29 to 54 % by weight of a polybutylene terephthalate resin having an intrinsic viscosity (η) of greater than 1.05 and 1.5 or less; ii) 35 to 68 % by weight of a polybutylene terephthalate resin having an intrinsic viscosity (η) of greater than 0.9 and 1.05 or less or 41 to 49 % by weight of a polybutylene terephthalate resin having an intrinsic viscosity (η) of 0.7 or more and less than 0.9; iii) 0.01 to 10 % by weight of a carboxy reactive epoxy resin; iv) 0.01 to 10 % by weight of polybutadiene rubber; and v) 0 to 1 % by weight of an injection solidification accelerator. In this case, the total weight of the polybutylene terephthalate resins (i) and (ii) is 80 to 99 % by weight. In this case, both injection solidification rate and impact strength may be improved, thereby satisfying the physical property balance between mechanical properties, fluidity, and heat resistance. In addition, excellent product reliability and appearance quality may be provided. Accordingly, the polybutylene terephthalate resin composition may be used to manufacture a molded article.

For example, the polybutylene terephthalate resin composition of the present invention may have a melt index (250°, 2.16 kgf) of 10 g/10 min or more, as a specific example, 10 to 30 g/10 min, as measured according to ISO1133.

For example, the polybutylene terephthalate resin composition of the present invention may have a tensile strength of 45 MPa or more, as a specific example, 45 to 50 MPa, as measured according to ISO 527.

For example, the polybutylene terephthalate resin composition of the present invention may have a tensile elongation of 15 % or more, as a specific example, 20 to 85 %, as measured according to ISO 527.

For example, the polybutylene terephthalate resin composition of the present invention may have an Izod impact strength (23°, notch) of 7 kJ/m², as a specific example, 7.8 to 10 kJ/m², as measured according to ISO 180.

For example, the polybutylene terephthalate resin composition of the present invention may have a heat deflection temperature of 100 °C or higher, as a specific example, 100 to 130 °C, as measured under a load of 0.45 MPa according to ISO 75.

For example, the polybutylene terephthalate resin composition of the present invention may have a heat deflection temperature of 40 °C or higher, as a specific example, 45 to 55 °C, as measured under a high load of 1.8 MPa according to ISO 75.

For example, the polybutylene terephthalate resin composition of the present invention may have a flexural modulus of 1,700 MPa or more, as a specific example, 1,750 to 2,100 MPa, as measured according to ISO 178.

For example, the polybutylene terephthalate resin composition of the present invention may have a flexural strength of 60 MPa or more, as a specific example, 64 to 80 MPa, as measured according to ISO 178.

### Method of preparing polybutylene terephthalate resin

### composition

Hereinafter, a method of preparing a polybutylene terephthalate resin composition according to the present invention will be described. In describing the method of preparing a polybutylene terephthalate resin composition according to the present invention, all contents of the above-mentioned polybutylene terephthalate resin composition are included.

For example, the method of preparing a polybutylene terephthalate resin composition according to the present invention includes a step of melt-kneading and extruding 80 to 99 % by weight of a base resin including a polybutylene terephthalate resin having an intrinsic viscosity (η) of greater than 1.05 and a polybutylene terephthalate resin having an intrinsic viscosity (η) of 1.05 or less; 0.01 to 10 % by weight of a carboxy reactive epoxy resin; 0.01 to 10 % by weight of polybutadiene rubber; and 0 to 1 % by weight of an injection solidification accelerator using an extruder.

Based on 100 % by weight in total of all components (base resin, carboxy reactive epoxy resin, polybutadiene rubber, and additives) constituting the polybutylene terephthalate resin composition, the injection solidification accelerator may include an ethylene-acrylate acid-based compound in an amount of 0.01 to 1 % by weight.

For example, in the melt-kneading step, the above-described additives may be included.

For example, the melt-kneading and extrusion step may be performed using one or more selected from the group consisting of a single-screw extruder, a twin-screw extruder, and a Banbury mixer. Preferably, the melt-kneading and extrusion step may be performed by uniformly mixing the components using a twin-screw extruder and performing extrusion to obtain a polybutylene terephthalate resin composition in pellet form. In this case, mechanical properties, thermal properties, plating adhesion, and appearance may be excellent.

For example, the step of preparing pellets using an extrusion kneader may be performed at an extrusion temperature of 250 to 300 °C, a flow ratio (F/R) of 50 to 90 kg/hr, and a screw rotation rate of 200 to 490 rpm, preferably at an extrusion temperature of 250 to 270 °C, an F/R of 50 to 90 kg/hr, and a screw rotation rate of 250 to 350 rpm.

After extruding the polybutylene terephthalate resin composition, a step of performing injection at an injection temperature of 240 to 280 °C, as a specific example, 250 to 270 °C, a mold temperature of 40 to 80°C, as a specific example, 50 to 70 °C, and an injection speed of 10 to 50 mm/sec, as a specific example, 20 to 40 mm/sec, may be included.

Hereinafter, a molded article including the polybutylene terephthalate resin composition of the present invention will be described. In describing the molded article including the polybutylene terephthalate resin composition of the present invention, all contents of the above-mentioned polybutylene terephthalate resin composition are included.

### Molded article

Through sufficient complementation of the components of the polybutylene terephthalate resin composition of the present invention, the polybutylene terephthalate resin composition may be used to manufacture a molded article requiring excellent moldability and mechanical properties, high-load heat resistance, and high injection solidification rate.

Methods commonly used in the art may be used to manufacture the molded article. For example, using a melt-kneaded product or pellets of the polybutylene terephthalate resin composition according to the present invention or a sheet (plate material) obtained by injecting the melt-kneaded product or the pellets, a molding method such as an injection molding method (injection molding), an injection compression molding method, an extrusion molding method (sheet casting), a press molding method, a pressure molding method, a thermal bending molding method, a compression molding method, a calender molding method, or a rotational molding method may be applied.

For example, the polybutylene terephthalate resin composition of the present invention may be prepared in the form of pellets by feeding a base resin (polybutylene terephthalate), a carboxy reactive epoxy resin, polybutadiene rubber, an injection solidification accelerator, and additives at a feeding rate of 50 kg/h into a main inlet of a twin-screw extruder (ϕ40, L/D: 42, SM Platek equipment) set to 250 °C and 250 rpm and melt-kneading and extruding the components.

As another example, the polybutylene terephthalate resin composition of the present invention may be prepared in the form of pellets by feeding a base resin (polybutylene terephthalate) and a carboxy reactive epoxy resin into a main inlet of a twin-screw extruder (ϕ40, L/D: 42, SM Platek equipment) set to 280 °C and 375 rpm, feeding polybutadiene rubber, an injection solidification accelerator, and additives at a feeding rate of 75 kg/h into an auxiliary inlet, and then melt-kneading and extruding the components.

As another example, the polybutylene terephthalate resin composition of the present invention may be prepared in the form of pellets by feeding a base resin (polybutylene terephthalate), a carboxy reactive epoxy resin, and polybutadiene rubber into a main inlet of a twin-screw extruder (ϕ40, L/D: 42, SM Platek equipment) set to 250 °C and 250 rpm, feeding an injection solidification accelerator and additives at a feeding rate of 50 kg/h into an auxiliary inlet, and then melt-kneading and extruding the components.

The pellets may be injected into an injection molding machine to manufacture a molded article.

To indirectly check the physical properties of the manufactured molded article, the pellets may be injected at an injection temperature of 260 °C, a mold temperature of 60 °C, and an injection rate of 30 mm/sec using an injection molding machine (ENGEL CO., 80 tons) to obtain an ISO standard specimen.

For example, based on the measurement results of the specimen, the polybutylene terephthalate resin composition of the present invention may have a melt index (250°, 2.16 kgf) of 10 g/10 min or more, as a specific example, 10 to 30 g/10 min, as measured according to ISO1133.

For example, the polybutylene terephthalate resin composition of the present invention may have a tensile strength of 45 MPa or more, as a specific example, 45 to 50 MPa, as measured according to ISO 527.

For example, the polybutylene terephthalate resin composition of the present invention may have a tensile elongation of 15 % or more, as a specific example, 20 to 85 %, as measured according to ISO 527.

For example, the polybutylene terephthalate resin composition of the present invention may have an Izod impact strength (23°, notch) of 7 kJ/m², as a specific example, 7.8 to 10 kJ/m², as measured according to ISO 180.

For example, the polybutylene terephthalate resin composition of the present invention may have a heat deflection temperature of 100 °C or higher, as a specific example, 100 to 130 °C, as measured under a load of 0.45 MPa according to ISO 75.

For example, the polybutylene terephthalate resin composition of the present invention may have a heat deflection temperature of 40 °C or higher, as a specific example, 45 to 55 °C, as measured under a high load of 1.8 MPa according to ISO 75.

For example, the polybutylene terephthalate resin composition of the present invention may have a flexural modulus of 1,700 MPa or more, as a specific example, 1,750 to 2,100 MPa, as measured according to ISO 178.

For example, the polybutylene terephthalate resin composition of the present invention may have a flexural strength of 60 MPa or more, as a specific example, 64 to 70 MPa, as measured according to ISO 178.

For example, the polybutylene terephthalate resin composition of the present invention may have a solidification rate (injection cooling time) of 14 seconds or less, as a specific example, 6 to 14 seconds, preferably 6 to 12 seconds as measured according to an internal evaluation method.

For example, the polybutylene terephthalate resin composition of the present invention may have a maximum injection peak pressure of 1,000 kgf/cm² or more, as a specific example, 1,000 to 1,150 kgf/cm².

When an iron bar is inserted into the internal lance part of a fastening part, the lance is strongly pushed and bounced using the lever principle, and then damage is evaluated, the polybutylene terephthalate resin composition of the present invention is not broken.

Specifically, the molded article may be an automotive fastening part, but the present invention is not limited thereto.

That is, the polybutylene terephthalate resin composition according to one embodiment of the present invention includes the polybutylene terephthalate resin having a specific intrinsic viscosity, the polybutadiene rubber, and the carboxy reactive epoxy resin. In the case of the molded article manufactured using the composition of the present invention, which is different from conventional compositions, both injection solidification rate and impact strength, which are in a trade-off relationship, may be improved, the physical property balance between mechanical properties, fluidity, and heat resistance may be excellent, and product reliability and appearance may be excellent.

In describing the polybutylene terephthalate resin composition of the present invention, the method of preparing the same, and the molded article including the same, it should be noted that other conditions or equipment not explicitly described herein may be appropriately selected within the range commonly practiced in the art without particular limitation.

Hereinafter, embodiments of the present invention will be described in detail so that a person skilled in the art to which the present invention pertains can easily practice the present invention. However, the present invention may be embodied in many different forms and is not limited to the embodiments described herein.

### [Examples]

### Example 1 and Comparative Examples 1 to 5 (Experiments without injection solidification accelerator)

Raw materials used in Examples and Comparative Examples are as follows.
A-1) Polybutylene terephthalate resin (intrinsic viscosity (IV): 0.83, product name: TH6082A)
A-2) Polybutylene terephthalate resin (IV: 0.1, product name: TH6098A)
A-3) Polybutylene terephthalate resin (IV: 1.12, product name: PBT1100-211S)
B) Carboxy reactive epoxy resin: Ethylene/n-butyl acrylate/glycidyl methacrylate resin (Dupont Co., product name: PTW)
(C) Polybutadiene rubber
C-1) Polybutadiene rubber (LG Chemical Co., product name: EM538)
C-2) Polybutadiene rubber (LG Chemical Co., product name: EM500)
(D) Injection solidification accelerator
D-1) Ethylene-acrylate acid-based compound (Bruggemann Co., product name: P250)
D-2) Inorganic injection solidification accelerator (Koch Co., product name: KCM6300)

### (Additives)

(E) Lubricant (LC102N)
(F) Antioxidant
F-1) Primary antioxidant (IR 1010)
F-2) Secondary antioxidant (Songnox 6260)
(G) Colorant (LG Chemical Co., product name: NR9089 black)
(H) Polyethylene elastomer (LG Chemical Co., product name: 1055D)

The raw materials of the polybutylene terephthalate resin composition shown in Table 1 below were mixed and extruded to prepare a polybutylene terephthalate resin composition having even dispersion in the form of pellets. Then, specimens for molded articles were prepared through an injection process in which the pellets were heated, injected into a mold, and then cooled to produce parts.

Specifically, the components shown in Table 1 below were mixed using a mixer, and the mixture was fed at a feeding rate of 75 kg/h into a main inlet of a twin-screw extruder (ϕ40, L/D: 42, SM Platek equipment) set to 250 °C and 250 rpm and extruded to prepare polybutylene terephthalate resin composition pellets.

After drying the prepared pellets in a convection oven set at 80 °C for more than 4 hours, the pellets were injected using an injection molding machine (ENGEL Co., 80 tons) at an injection temperature of 260 °C, a mold temperature of 60 °C, and an injection rate of 30 mm/sec to prepare ISO specimens.

**[Table 1]**

| Classifica tion | Examp le 1 | Comparat ive Example 1 | Comparat ive Example 2 | Comparat ive Example 3 | Comparat ive Example 4 | Comparat ive Example 5 |
|---|---|---|---|---|---|---|
| A-1 | 42.9 | - | - | - | 92.9 | 42.9 |
| A-2 | - | 42.9 | 40.9 | - | - | - |
| A-3 | 50 | 50 | 50 | 92.9 | - | 50 |
| B | 3 | 3 | 4 | 3 | 3 | 3 |
| C-1 | 3 | 3 | 4 | 3 | 3 | - |
| C-2 | - | - | - | - | - | 3 |
| D-1 | - | - | - | - | - | - |
| D-2 | - | - | - | - | - | - |
| E | 0.6 | 0.6 | 0.6 | 0.6 | 0.6 | 0.6 |
| F-1 | 0.3 | 0.3 | 0.3 | 0.3 | 0.3 | 0.3 |
| F-2 | 0.2 | 0.2 | 0.2 | 0.2 | 0.2 | 0.2 |
| G | 1 | 1 | 1 | 1 | 1 | 1 |

(In Table 1, based on 100 parts by weight in total of materials A-1 to F-2, component G was added in parts by weight)

### Test Example 1 : Evaluation of properties of molded article specimens

The physical properties of the molded article specimens prepared according to Example 1 and Comparative Examples 1 to 5 were evaluated. Evaluation criteria are as follows.
- Melt index: Melt index was measured according to ISO 1133 (250 °C, 2.16 kg).
- Tensile strength and elongation: Tensile strength and elongation were measured according to ISO 527 (50 mm/min).
- Impact strength (Izod): Impact strength was measured according to ISO 180/1A (Notched, 23 °C).
- Heat deflection temperature: Heat deflection temperature was measured under a high load of 1.82 MPa and under a low load of 0.45 MPa according to ISO 75.
- Flexural strength and flexural modulus: Flexural strength and flexural modulus were measured according to ISO 178 (4 mm, SPAN 64, rate: 2 mm/min)
- Solidification rate (injection cooling time): Cooling time required to solidify to a state where there is no further change in length was measured in seconds.
- Maximum injection peak pressure: The maximum peak pressure applied to an injection machine at the time of solidification was measured in the unit of kgf/cm².
- Part lance crack (lance crack): Part lance crack was measured according to the method shown in FIG. 1. FIG. 1 below is a diagram schematically showing a part lance crack measurement method. An iron bar was inserted into the internal lance part of the left connector specimen of FIG. 1, the lance was strongly pushed and bounced using the lever principle, and then damage was visually observed (See the drawing on the right in FIG. 1). When damage occurred, it was marked as NG, and when damage did not occur, it was marked as OK.

The results measured by the evaluation criteria are shown in Table 2 below.

**[Table 2]**

| Classifica tion | Examp le 1 | Comparat ive Example 1 | Comparat ive Example 2 | Comparat ive Example 3 | Comparat ive Example 4 | Comparat ive Example 5 |
|---|---|---|---|---|---|---|
| Melt index (g/10 min) | 16 | 14 | 12 | 8.1 | 45 | 16 |
| Tensile strength (MPa) | 45 | 46 | 44 | 48 | 44 | 44 |
| Tensile elongation (%) | 85 | 143 | 152 | 163 | 25 | 15 |
| Impact strength (kJ/m²) | 8.8 | 9.5 | 10.5 | 10.5 | 7.5 | 7.5 |
| HDT (0.45 MPa) | 127 | - | - | - | - | - |
| HDT (1.8 MPa) | 50 | 50 | 49.1 | 52 | 52 | 52 |
| Flexural modulus (MPa) | 1795 | 1940 | 1800 | 2020 | 1950 | 1740 |
| Flexural strength (MPa) | 66 | 69 | 65 | 68 | 68 | 63 |
| Solidifica tion rate (sec. ) | 10 | 12 | 14 | 14 | 12 | 12 |
| Maximum injection peak pressure (kgf/cm²) | 1080 | 1120 | 1180 | 1420 | 850 | 1130 |
| Whether part lance cracks occur | OK | OK | OK | OK | NG | NG |

Referring to Tables 1 and 2, the polybutylene terephthalate resin composition of Example 1 according to the present invention has high impact strength, flexural modulus, high-load heat deflection temperature, and melt index, and the solidification rate and maximum injection peak pressure thereof are reduced. In addition, part lance cracks do not occur. Accordingly, the molded article manufactured using the polybutylene terephthalate resin composition satisfies physical properties such as impact strength, tensile strength, and flexural strength and has excellent processability and high-load heat resistance. In addition, in the case of the molded article, due to a decrease in solidification rate, occurrence of appearance defects is reduced. Thus, product reliability and appearance quality are provided at the same time.

On the other hand, in the case of Comparative Examples 1 to 5 in which intrinsic viscosity ratio is out of the proper range, compared to Example 1, fluidity is reduced, and solidification rate is gradually reduced.

In particular, in the case of Comparative Example 3 in which a polybutylene terephthalate resin is used alone without considering intrinsic viscosity ratio, due to a decrease in fluidity due to high viscosity, injection moldability is reduced, causing problems such as non-molding in a miniaturized and thin mold. In the case of Comparative Example 4, part cracks occur due to a decrease in impact strength.

In addition, Comparative Example 5 using polybutadiene rubber out of the appropriate composition range exhibits poor rigidity and impact strength.

In addition, when an inorganic injection solidification accelerator was used, part cracks occurred due to a decrease in impact strength.

### Examples 2 to 4 and Comparative Examples 6 to 14

The raw materials of the polybutylene terephthalate resin composition shown in Tables 3 and 4 were mixed and extruded to prepare a polybutylene terephthalate resin composition having even dispersion in the form of pellets. Then, specimens for molded articles were prepared through an injection process in which the pellets were heated, injected into a mold, and then cooled to produce parts. Unless otherwise specified, the same extrusion and injection conditions used in Example 1 were applied.

**[Table 3]**

| Classification | Example 2 | Example 3 | Example 4 |
|---|---|---|---|
| A-1 | 42.7 | - | - |
| A-2 | - | 42.7 | 57.7 |
| A-3 | 50 | 50 | 35 |
| B | 3 | 3 | 4 |
| C-1 | 3 | 3 | 4 |
| C-2 | - | - | - |
| D-1 | 0.2 | 0.2 | 0.2 |
| D-2 | - | - | - |
| E | 0.6 | 0.6 | 0.6 |
| F-1 | 0.3 | 0.3 | 0.3 |
| F-2 | 0.2 | 0.2 | 0.2 |
| G | 1 | 1 | 1 |
| H | - | - | - |

**[Table 4]**

| Classif ication | Compa rativ e Examp le 6 | Compa rativ e Examp le 7 | Compa rativ e Examp le 8 | Compa rativ e Examp le 9 | Compa rativ e Examp le 10 | Compa rativ e Examp le 11 | Compa rativ e Examp le 12 | Compa rativ e Examp le 13 | Compa rativ e Examp le 14 |
|---|---|---|---|---|---|---|---|---|---|
| A-1 | 75 | 67.3 | 65.6 | 64.6 | 56.4 | 56.4 | - | 54.4 | 39.8 |
| A-2 | 18.9 | - | 27.3 | 26.3 | - | - | 77.7 | - | - |
| A-3 | - | 21.6 | - | - | 36.3 | 36.3 | 15 | 36.3 | 58.9 |
| B | - | - | 2 | 3 | 6 | 8 | 3 | - | - |
| C-1 | - | - | 2 | 3 | - | - | 3 | 6 | - |
| C-2 | - | - | - | - | 0.2 | 0.2 | 0.2 | 0.2 | 0.2 |
| D-1 | 0.6 | 0.6 | 0.6 | 0.6 | 0.6 | 0.6 | 0.6 | 0.6 | 0.6 |
| D-2 | 0.2 | 0.2 | 0.2 | 0.2 | 0.2 | 0.2 | 0.2 | 0.2 | 0.2 |
| E | 0.3 | 0.3 | 0.3 | 0.3 | 0.3 | 0.3 | 0.3 | 0.3 | 0.3 |
| F-1 | 1 | 1 | 1 | 1 | 1 | 1 | 1 | 1 | 1 |
| F-2 | - | - | - | - | - | - | - | - | - |
| G | 1 | 1 | 1 | 1 | 1 | 1 | 1 | 1 | 1 |
| H | 5 | 10 | 2 | 2 | - | - | - | - | - |

(For reference, the total amount of raw materials A-1 to H shown in Tables 3 and 4 is given as 100 % by weight.)

### Test Example 2: Evaluation of properties of molded article specimens

The physical properties of the molded article specimens prepared according to Examples 2 to 4 and Comparative Examples 6 to 14 were evaluated, and the measured results are shown in Tables 5 and 6 below.

**[Table 5]**

| Classification | Example 2 | Example 3 | Example 4 |
|---|---|---|---|
| Melt index (g/10 min) | 59 | 47 | 33.7 |
| Tensile strength (MPa) | 52 | 47 | 50.4 |
| Tensile elongation (%) | 12 | 101 | 23 |
| Impact strength (kJ/m²) | 4.8 | 4.7 | 6.4 |
| HDT (0.45 MPa) | | 99.4 | 121.1 |
| HDT (1.8 MPa) | 52 | 49 | 55 |
| Flexural modulus (MPa) | 2100 | 1887.3 | 2070.5 |
| Flexural strength (MPa) | 80 | 70.9 | 77.1 |
| Solidification rate (sec.) | 9 | 10 | 8 |
| Maximum injection peak pressure (kgf/cm²) | 650 | 740 | 750 |
| Whether part lance cracks occur | NG | NG | NG |

**[Table 6]**

| Classif ication | Compar ative Exampl e 6 | Compar ative Exampl e 7 | Compar ative Exampl e 8 | Compar ative Exampl e 9 | Compar ative Exampl e 10 | Compar ative Exampl e 11 | Compar ative Exampl e 12 | Compar ative Exampl e 13 | Compar ative Exampl e 14 |
|---|---|---|---|---|---|---|---|---|---|
| Melt index (g/10 min) | 59 | 47 | 33.7 | 31.5 | 25 | 17.2 | 21 | 25.4 | 34.7 |
| Tensile strengt h (MPa) | 52 | 47 | 50.4 | 47.6 | 46 | 44 | 47 | 48 | 54 |
| Tensile elongat ion (%) | 12 | 101 | 23 | 30.2 | 24 | 27 | 65 | 21 | 15 |
| Impact strengt h (kJ/m²) | 4.8 | 4.7 | 6.4 | 7.1 | 5.6 | 5.8 | 7.8 | 5.8 | 4.1 |
| HDT (0.45 MPa) | | 99.4 | 121.1 | 118 | 127 | 127 | | 127 | |
| HDT (1.8 MPa) | 52 | 49 | 55 | 51.4 | 51.6 | 50.6 | 50 | 51.3 | 57 |
| Flexura l modulus (MPa) | 2100 | 1887.3 | 2070.5 | 1830 | 1880 | 1785 | 1785 | 1925 | 1895 |
| Flexura l strengt h (MPa) | 80 | 70.9 | 77.1 | 69.3 | 68 | 65 | 65 | 70 | 71 |
| Solidif ication rate (sec.) | 9 | 10 | 8 | 8 | 12 | 14 | 10 | 12 | 7 |
| Maximum injecti on peak pressur e (kgf/cm² ) | 650 | 740 | 750 | 650 | 1155 | 1180 | 990 | 1105 | 620 |
| Whether part lance | NG | NG | NG | NG | NG | NG | NG | NG | NG |
| cracks occur | | | | | | | | | |

Referring to Tables 3 to 6, the polybutylene terephthalate resin compositions of Examples 2 to 4 according to the present invention have high impact strength, flexural modulus, high-load heat deflection temperature, and melt index, and the solidification rate and maximum injection peak pressure thereof are reduced. In addition, part lance cracks do not occur. Accordingly, the molded articles manufactured using the polybutylene terephthalate resin compositions satisfy physical properties such as impact strength, tensile strength, and flexural strength and have excellent processability and high-load heat resistance. In addition, in the case of the molded article, due to a decrease in solidification rate, occurrence of appearance defects is reduced. Thus, product reliability and appearance quality are provided at the same time.

On the other hand, in the case of Comparative Examples 6 to 14 in which intrinsic viscosity ratio is out of the proper range, compared to Examples 2 to 4, fluidity is reduced, and solidification rate is gradually reduced or impact strength is significantly reduced.

That is, the polybutylene terephthalate resin composition according to one embodiment of the present invention includes the composite resin including the polybutylene terephthalate resin and the polyethylene terephthalate resin in a specific content ratio (wt%), the hydrolysis stabilizer containing the (meth)acrylate compound-conjugated diene compound-aromatic vinyl compound copolymer and the carboxy reactive epoxy resin in a specific content ratio (wt%), and the injection solidification accelerator. Due to these compositional characteristics, when a molded article is manufactured using the composition of the present invention, both injection solidification rate and impact strength, which are in a trade-off relationship, may be improved. Accordingly, the physical property balance between mechanical properties, fluidity, and heat resistance may be excellent, and excellent product reliability and appearance quality may be provided.

## Claims

1. A polybutylene terephthalate resin composition, comprising:
80 to 99 % by weight of a base resin comprising a polybutylene terephthalate resin having an intrinsic viscosity (η) of greater than 1.05 and a polybutylene terephthalate resin having an intrinsic viscosity (η) of 1.05 or less;
0.01 to 10 % by weight of a carboxy reactive epoxy resin; and
0.01 to 10 % by weight of polybutadiene rubber.

2. The polybutylene terephthalate resin composition according to claim 1, wherein the polybutylene terephthalate resin having an intrinsic viscosity (η) of 1.05 or less comprises a polybutylene terephthalate resin having an intrinsic viscosity of less than 0.9 and a polybutylene terephthalate resin having an intrinsic viscosity of greater than 0.9 and 1.05 or less in a weight ratio of 30:70 to 60:40.

3. The polybutylene terephthalate resin composition according to claim 1, wherein the polybutylene terephthalate resin having an intrinsic viscosity (η) of greater than 1.05 comprises 29 to 55 % by weight of a polybutylene terephthalate resin having an intrinsic viscosity of greater than 1.05 and 1.5 or less based on 100 % by weight in total of the base resin, the carboxy reactive epoxy resin, the polybutadiene rubber, additives, and an injection solidification accelerator constituting the polybutylene terephthalate resin composition.

4. The polybutylene terephthalate resin composition according to claim 1, wherein the carboxy reactive epoxy resin comprises one or more selected from an ethylene-n-butyl acrylate-glycidyl methacrylate copolymer, an ethylene-glycidyl methacrylate copolymer, an ethylene-acrylic ester-glycidyl methacrylate copolymer, an ethylene-methyl acrylate-glycidyl methacrylate copolymer, an ethylene-dimethacrylate-glycidyl methacrylate copolymer, an ethylene-acrylate-glycidyl methacrylate copolymer, and an ethylene-vinyl acetate-glycidyl methacrylate copolymer.

5. The polybutylene terephthalate resin composition according to claim 1, wherein the carboxy reactive epoxy resin comprises 1 to 15 % by weight of a glycidyl methacrylate-derived unit.

6. The polybutylene terephthalate resin composition according to claim 1, wherein the polybutadiene rubber has a bulk density of 0.25 g/cc or more as measured according to ASTM D1895 and has an Izod impact strength (-30°C, 1/4" thickness) of 10 kg/cm.cm or more and an Izod impact strength (23°C, 1/4" thickness) of 50 kg/cm.cm or more as measured according to ASTM D256, and in the polybutadiene rubber, a percentage of particles passing through a #20 mesh of total particles is 3 % or less.

7. The polybutylene terephthalate resin composition according to claim 1, wherein the polybutylene terephthalate resin composition comprises 1 % by weight or less of one or more injection solidification accelerators selected from talc, wollastonite, and an ethylene-acrylate acid-based compound.

8. The polybutylene terephthalate resin composition according to claim 7, wherein the ethylene-acrylate acid-based compound is comprised in an amount of 0.01 to 1 % by weight based on 100 % by weight in total of the base resin, the carboxy reactive epoxy resin, the polybutadiene rubber, the additives, and the injection solidification accelerator constituting the polybutylene terephthalate resin composition.

9. The polybutylene terephthalate resin composition according to claim 1, wherein the polybutylene terephthalate resin composition comprises additives selected from a lubricant, an antioxidant, and a colorant.

10. A polybutylene terephthalate resin composition, comprising:
29 to 55 % by weight of a polybutylene terephthalate resin having an intrinsic viscosity (η) of greater than 1.05 and 1.5 or less;
0 to 68 % by weight of a polybutylene terephthalate resin having an intrinsic viscosity (η) of greater than 0.9 and 1.05 or less;
0 to 50 % by weight of a polybutylene terephthalate resin having an intrinsic viscosity (η) of 0.7 or more and less than 0.9;
0.01 to 10 % by weight of a carboxy reactive epoxy resin;
0.01 to 10 % by weight of polybutadiene rubber; and
0 to 1 % by weight of an injection solidification accelerator.

11. A polybutylene terephthalate resin composition, comprising:
i) 29 to 54 % by weight of a polybutylene terephthalate resin having an intrinsic viscosity (η) of greater than 1.05 and 1.5 or less;
ii) 35 to 68 % by weight of a polybutylene terephthalate resin having an intrinsic viscosity (η) of greater than 0.9 and 1.05 or less or 41 to 49 % by weight of a polybutylene terephthalate resin having an intrinsic viscosity (η) of 0.7 or more and less than 0.9;
iii) 0.01 to 10 % by weight of a carboxy reactive epoxy resin;
iv) 0.01 to 10 % by weight of polybutadiene rubber; and
v) 0 to 1 % by weight of an injection solidification accelerator,
wherein a total weight of the polybutylene terephthalate resins (i) and (ii) is 80 to 99 % by weight.

12. A method of preparing a polybutylene terephthalate resin composition, comprising melt-kneading and extruding 80 to 99 % by weight of a base resin comprising a polybutylene terephthalate resin having an intrinsic viscosity (η) of greater than 1.05 and a polybutylene terephthalate resin having an intrinsic viscosity (η) of 1.05 or less; 0.01 to 10 % by weight of a carboxy reactive epoxy resin; 0.01 to 10 % by weight of polybutadiene rubber; and 0 to 1 % by weight of an injection solidification accelerator using an extruder.

13. A molded article, comprising the polybutylene terephthalate resin composition according to any one of claims 1 to 11.

14. The molded article according to claim 13, wherein the molded article is a fastening part for automotive electric/electronic equipment.
